# EUROPÄISCHE PATENTSCHRIFT

(11) **EP 4 200 667 B1**
(45) Veröffentlichungstag und Bekanntmachung des Hinweises auf die Patenterteilung: **28.10.2026**
(21) Anmeldenummer: 21737578.1
(22) Anmeldetag: 22.06.2021
(51) Int. Cl.: G03B 11/04, G08B 13/196

(54) **ÜBERWACHUNGSKAMERAEINHEIT MIT ROLLO**
SURVEILLANCE CAMERA UNIT WITH BLIND
UNITÉ DE CAMÉRA DE SURVEILLANCE DOTÉE D'UN STORE

(30) Priorität: 19.08.2020 DE 202020104811 U
(43) Veröffentlichungstag der Anmeldung: 28.06.2023
(73) Patentinhaber: Dallmeier electronic GmbH & Co. KG., 93047 Regensburg (DE)
(72) Erfinder: DALLMEIER, Dieter, 93186 Pettendorf (DE)
(74) Vertreter: Glück Kritzenberger Patentanwälte PartGmbB
(86) Internationale Anmeldenummer: PCT/EP2021/066946
(87) Internationale Veröffentlichungsnummer: WO 2022/037826

(56) Entgegenhaltungen:
- CN-U- 209 472 677
- DE-U1- 20 219 004
- GB-A- 934 760
- JP-A- S6 169 019
- US-B2- 9 538 053

## Beschreibung

Die Erfindung betrifft eine Überwachungskameraeinheit.

Im Bereich der professionellen Videoüberwachung größerer Überwachungsbereiche bestehen hohe Anforderungen an die Auflösung von Details der erfassten Videodaten. Die hierzu verwendeten Videoüberwachungsanlagen weisen häufig mehrere Überwachungskameras auf, welche speziell für die Videoüberwachung von unterschiedlichsten Überwachungsbereichen eingerichtet sind.

Eine derartige Überwachungskameraeinheit weist ein vorzugsweise geschlossenes Kameragehäuse auf, in welchen die eigentliche Kamera, umfassend zumindest einen bildgebenden Sensor und die zugehörige Optik als auch weitere Bauteile und/oder weitere Komponenten aufgenommen sind.

Das Kameragehäuse umfasst zum Überwachungsbereich der Kamera hin eine Öffnung, die von einer Frontscheibe aus einem transparenten Material, vorzugsweise Glas oder Kunststoff, abgedeckt ist. Über die Frontscheibe wird der Überwachungsbereich von der im Kameragehäuse aufgenommen Kamera erfasst.

Aufgrund datenschutzrechtlicher Vorgaben besteht das Erfordernis, dass bei Veranstaltungen auf den mittels der Kameraeinheiten überwachbaren Bereichen eine Überwachung des dortigen Geschehens, insbesondere von Demonstrationen oder sonstigen Veranstaltungen mit Menschenansammlungen eine Überwachung nicht zulässig ist. Prinzipiell ist zumindest eine Abschaltung eines Teils des Überwachungssystems grundsätzlich möglich, jedoch ist von außen nicht erkennbar, ob die Kameraeinheiten tatsächlich ausgeschaltet sind oder sich weiterhin in Betrieb befinden. Daher werden bei derartigen Veranstaltungen häufig die "abzuschaltenden" Kameraeinheiten manuell der Erfassungsbereich abgedeckt oder ein haubenartiges Element über die jeweilige Kameraeinheit übergestülpt. Derartige manuellen Maßnahmen sind zeit- und kostenintensiv.

Aus der DE 202 19 004 U1 ist eine Kameraeinrichtung für ein Kraftfahrzeug oder einen mit einem Kraftfahrzeug verbindbaren Anhänger umfassend ein "rolloartiges" Abdeckelement zur Abdeckung des Objektives einer Kameraeinheit, die in einem Kameragehäuse aufgenommen ist. Die Kameraeinheit umfassend einen Sensor und ein Objektiv ist in einem Zwischenraum des Kameragehäuses aufgenommen, der seitlich von zwei Wangen des Kameragehäuses begrenzt ist und eine stirnseitige Gehäuseöffnung aufweist. Die stirnseitige Gehäuseöffnung ist über das rolloartige Abdeckelement bzw. Rollo verschließbar. Eine vergleichbare Kameralösung zeigt die US 9 538 053 B2 in einem Ausführungsbeispiel.

Ferner offenbart die CN 209 472 677 U ein Gesichtserkennungsgerät, dass ein Schutzgehäuse zur Aufnahme einer Kamera umfasst, wobei das Schutzgehäuse an einem oberen freien Ende einer Tragstange angeordnet ist. Zum Schutz der im Schutzgehäuse aufgenommenen Kamera kann die Vorderseite des Schutzgehäuses über ein unteres und oberes Rollo verschlossen werden.

Es ist daher Aufgabe der Erfindung, eine Überwachungskameraeinheit zu schaffen, bei der die Erfassung einer Bildaufnahme auch von außen sicher erkennbar abgeschaltet werden kann.

Die Aufgabe wird durch eine Überwachungskameraeinheit mit den Merkmalen des Anspruches 1 gelöst. Vorteilhafte Weiterbildungen der Erfindung sind Gegenstand der abhängigen Ansprüche. Vorteilhafte Weiterbildungen der Erfindung sind auch in der Beschreibung und der Zeichnung offenbart.

Erfindungsgemäß enthält die Überwachungskameraeinheit ein Kameragehäuse, in welchem wenigstens ein bildgebender Sensor als auch eine zugeordnete Optik angeordnet sind, wobei das Kameragehäuse eine Vorderseite aufweist, an der eine Rahmeneinheit mit einer Frontscheibe aus einem transparenten Material, vorzugsweise Glas oder Kunststoff angeordnet ist, wobei in der Rahmeneinheit ein Rahmen angeordnet ist und die Rahmeneinheit modulartig als Einheit mit dem Kameragehäuse verbunden ist, wobei die Rahmeneinheit ein Rollo und eine Betätigungsvorrichtung für das Rollo trägt bzw. zumindest teilweise aufnimmt. Durch die zumindest abschnittsweise transparente Frontscheibe ist der Überwachungsbereich der Überwachungskameraeinheit mittels des bildgebenden Sensors und die zugehörige Optik erfassbar. Zugleich schützt die Frontscheibe die Optik und alle weiteren, im Kameragehäuse aufgenommenen Komponenten gegen Witterungseinflüsse und/oder eine mechanische Beschädigung, insbesondere auch Vandalismus.

Gemäß der Erfindung ist in der Rahmeneinheit im Bereich der Frontscheibe ein Rollo angeordnet ist, welches mittels einer Betätigungsvorrichtung zwischen einer die Frontscheibe freigebenden Öffnungsstellung und einer die Frontscheibe zumindest teilweise abdeckenden Abdeckstellung bewegbar ist. Besonders vorteilhaft kann mittels des im Kameragehäuse aufgenommenen Rollos die Frontscheibe zumindest abschnittsweise derart verdeckt werden, dass dies von außen ersichtlich ist, d.h. in der Öffnungsstellung ist die Frontscheibe freigegeben und eine Bilderfassung über die Kamera ist möglich, wohingegen in der Abdeckstellung durch das Rollo die Frontscheibe zumindest teilweise, vorzugsweise vollständig abgedeckt ist. Besonders vorteilhaft ist die hinter der Frontscheibe und vorzugsweise im Kameragehäuse angeordnete durch die Frontscheibe nach außen hin deutlich sichtbar, so dass die "Abschaltung" der Bilderfassung über die an sich noch weiter im Betrieb befindliche Überwachungskameraeinheit auch nach außen klar erkennbar ist.

Die Betätigungsvorrichtung kann Aufroll- und Federmechanismen enthalten, die üblich für die Betätigung von Rollos sind.

Erfindungsgemäß ist die Frontscheibe in dem Rahmen gehalten, und vorzugsweise das Rollo in Öffnungsstellung zusammengerollt und/oder hinter dem Rahmen und vor der Optik angeordnet. Besonders vorteilhaft wird durch das Rollo damit in der Öffnungsstellung die Frontscheibe frei gegeben und die Funktion der Überwachungskameraeinheit nicht beeinträchtigt.

Erfindungsgemäß umfasst die Betätigungsvorrichtung eine Führungsstange, welche mit ihren freien Enden in am Rahmen ausgebildeten gegenüberliegenden Führungen der Betätigungsvorrichtung geführt ist.

Die Betätigungsvorrichtung umfasst ferner eine mit der Führungsstange verbundene Federeinrichtung, welche das an der Führungsstange befestigte Rollo in die Abdeckstellung vorspannt. Besonders vorteilhaft kann die Federeinrichtung mit zumindest einem der freien Enden der Führungsstange verbunden sein. Hierdurch wird dem Rollo eine Formstabilität verliehen, die in jeder Stellung beibehalten wird. Das Rollo bleibt somit glatt, insbesondere in Abdeckstellung.

Vorzugsweise umfasst die Betätigungsvorrichtung eine mit der Führungsstange verbundene Federeinrichtung, welche das an der Führungsstange befestigte Rollo in die Abdeckstellung vorspannt. Auf diese Weise kann das Rollo unabhängig von der Schwerkraft in jede Richtung in seiner Abdeckstellung vorgespannt werden und dabei glatt gehalten werden.

In einer vorteilhaften Weiterbildung der Erfindung umfasst die Betätigungsvorrichtung eine motorisch angetriebene Welle, auf der das Rollo in Öffnungsstellung aufgerollt ist. Das Rollo kann dann motorisch, insbesondere von einer externen Steuerungsstelle, zwischen seiner Öffnungsstellung und seiner Abdeckstellung bewegt werden. In aufgerollter Stellung benötigt das Rollo kaum Platz, so dass es sich leicht im Bereich des die Frontscheibe umgebenden Rahmens anordnen lässt.

Vorzugsweise ist die Welle mit einem durch eine Steuerelektronik ansteuerbaren Stellmotor, insbesondere Schrittmotor der Betätigungsvorrichtung verbunden, was eine beliebige externe Ansteuerung der Stellung des Rollos erlaubt.

Vorzugsweise ist die Frontscheibe und ihr Rahmen rechteckig ausgebildet, wobei die längeren Seiten des Rechtecks sich horizontal erstrecken. Die Welle verläuft dann horizontal und ist vorzugsweise am oberen Ende der Frontscheibe bzw. des Rahmens angeordnet. Auf diese Weise kann das Rollo platzsparend und ohne Beeinträchtigung der Frontscheibe angeordnet werden, wobei sich das Rollo bei entsprechender Konzeption allein aufgrund seiner Schwerkraft bei der Führung in seitlichen Führungsnuten selbsttätig in die Abdeckstellung ausrollen kann.

Vorzugsweise ist die Federeinrichtung mit beiden freien Enden der Führungsstange verbunden. Auf diese Weise wird die Vorspannung auf das Rollo gleichmäßig auf das Rollo übertragen.

In einer vorteilhaften Weiterbildung der Erfindung besteht die Führungsstange aus einem schweren Material, insbesondere massivem Metall, und ist konzipiert, das Rollo durch ihr Eigengewicht in die Abdeckstellung nach unten vorzuspannen. Auf diese Weise kann eine schwerkraftbedingte Absenkung des Rollos in Abdeckstellung realisiert werden. Das Rollo bleibt immer gut gespannt und glatt. In diesem Fall kann sogar auf eine Federeinrichtung zum Schließen des Rollos verzichtet werden. Erfindungsgemäß ist der Rahmen an der mit dem Kameragehäuse verbindbaren Rahmeneinheit angeordnet, die das Rollo und die Betätigungsvorrichtung für das Rollo trägt. Dies erlaubt es, den Rahmen mit der Frontscheibe und allen Komponenten, die mit dem Rollo zusammenhängen als modulartige Rahmeneinheit in einem Vorgang von dem Kameragehäuse abzunehmen und zu reparieren oder auszutauschen.

Vorzugsweise besteht das Rollo aus einem blickdichten Material, vorzugsweise einer gewebeverstärkten Folie. Derartige Materialen bzw. Folien sind lichtdurchlässig, unterbinden jedoch eine Bilderkennung. Darüber hinaus sind diese UV-beständig und darüber hinaus auch preisgünstig. Selbstverständlich kann das Rollo auch aus gelenkig miteinander verbundenen Lamellen bestehen. Alternativ kann auch ein lichtundurchlässiges Material Verwendung finden.

In einer vorteilhaften Weiterbildung der Erfindung weist das Rollo an seiner der Frontscheibe zugewandten Seite eine Markierung auf, die die Abdeckstellung des Rollos nach außen verdeutlicht. Die Kenntlichmachung der Abdeckstellung des Rollos wird hierdurch abermals verbessert. Die Markierung kann eine Signalmarkierung sein. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft eine perspektivische Darstellung einer Überwachungskameraeinheit,
- Fig. 2: beispielhaft eine perspektivische Darstellung einer Rahmeneinheit der Überwachungskameraeinheit mit Rollo und Betätigungsvorrichtung für das Rollo von außen,
- Fig. 3: beispielhaft eine schematisierte Ansicht der Rahmeneinheit von innen zur Darstellung des Aufbaus der Betätigungsvorrichtung für das Rollo,
- Fig. 4: beispielhaft eine Ansicht auf die Rahmeneinheit aus Fig. 2 von außen bei teilweiser abgerollten Rollos und
- Fig. 5: einen schematischen Schnitt durch die Rahmeneinheit gemäß Fig. 4 mit teilweise abgerollten Rollo.

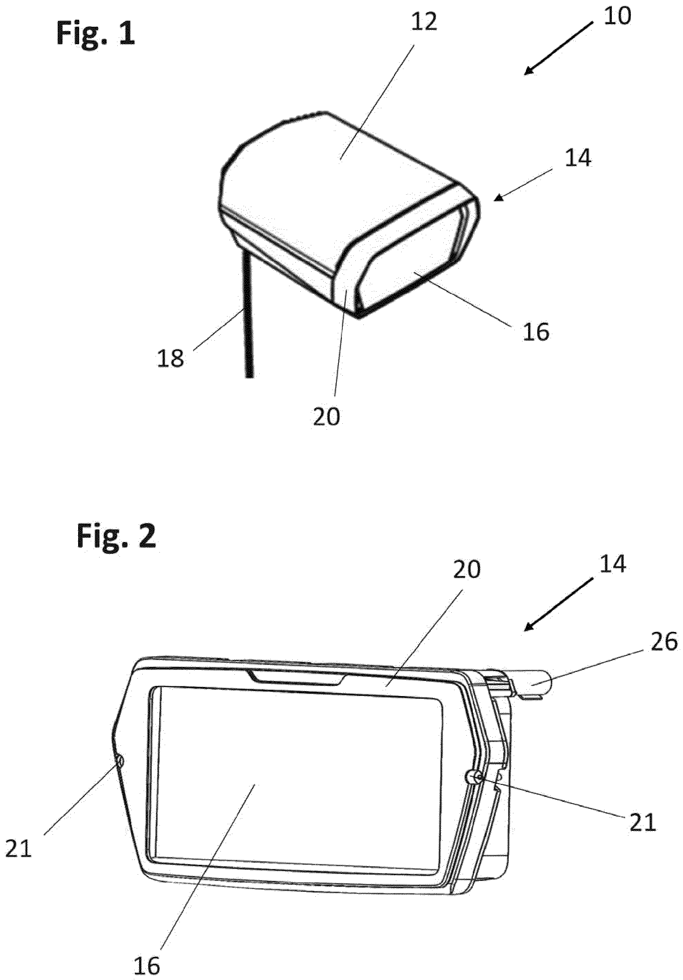

Fig. 1 zeigt eine Überwachungskameraeinheit 10 mit einem Kameragehäuse 12, an dessen Vorderseite eine Rahmeneinheit 14 mit einer Frontscheibe 16 aus einem transparenten Material, vorzugsweise Glas oder Kunststoff. Die Rahmeneinheit 14 und die darin aufgenommene Frontscheibe 16 sind vorzugsweise rechteckförmig ausgebildet.

Im Inneren des Kameragehäuses sind - nicht dargestellt - wenigstens ein bildgebender Sensor und eine zugehörige Optik angeordnet, die zur Frontscheibe 16 hin orientiert ist, um so durch die Frontscheibe 16 hindurch einen Überwachungsbereich der Überwachungskameraeinheit 10 erfassen zu können. Bevorzugt bilden der Sensor und die Optik ein Sensormodul aus.

Die Überwachungskameraeinheit 10 ist über ein Kabel 18 mit Strom versorgt und für den Datentransfer mit einer Überwachungsstation verbunden. Die Überwachungskameraeinheit 10 kann allerdings auch einen Akku aufweisen und über eine drahtlose Datenverbindung kommunizieren.

Fig. 2 zeigt beispielhaft in einer schematischen perspektivischen Frontansicht die Rahmeneinheit 14 detaillierter.

Erfindungsgemäß ist in dem Kameragehäuse 12 im Bereich der Frontscheibe 16 ein Rollo 24 angeordnet, welches mittels einer Betätigungsvorrichtung 22, 26, 30, 32, 34 zwischen einer die Frontscheibe 16 freigebenden Öffnungsstellung und einer die Frontscheibe 16 zumindest teilweise abdeckenden Abdeckstellung bewegbar ist. Vorteilhaft kann hierdurch die Frontscheibe 16 zumindest teilweise und von außen erkennbar verdeckt werden und damit effektiv eine Bilderfassung unterbunden werden.

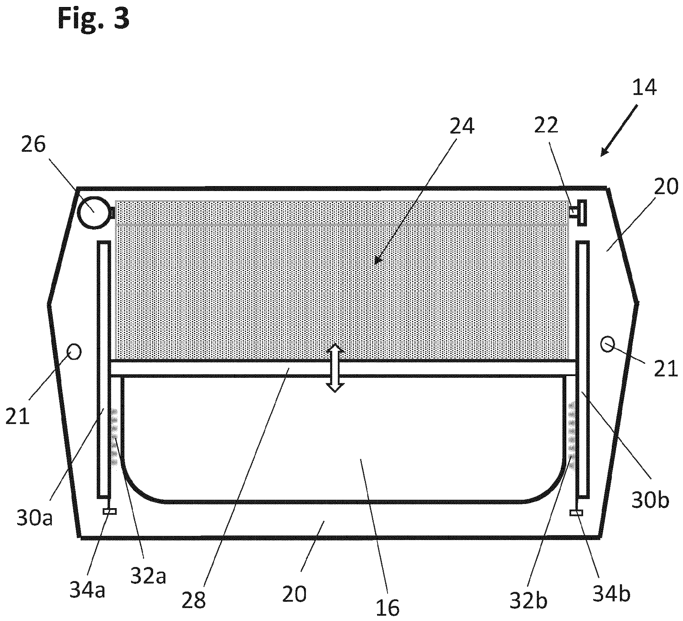

Die Rahmeneinheit 14 kann modulartig als Einheit mit dem Kameragehäuse 12 verbunden, insbesondere mittels der Schraublöcher 21 verschraubt werden. Der Vorteil der Rahmeneinheit 14 besteht darin, dass diese ein erfindungsgemäßes Rollo 24 (Fig. 3) nebst zugehöriger Betätigungsvorrichtung für das Rollo 24 aufweist.

Wie in Fig. 3 beispielhaft anhand einer schematischen Funktionsdarstellung gezeigt, trägt der Rahmen 20 der Rahmeneinheit 14 oben an seiner dem Kameragehäuse 12 zugewandten Seite eine horizontal verlaufende Welle 22, auf der das Rollo 24 aufrollbar ist. Die Welle 22 ist mit einem elektronisch angesteuerten Schrittmotor 26 antriebstechnisch verbunden, mittels dessen sich die Rotation der Welle 22 und damit das Auf- und Abrollen des Rollos 24 vorzugsweise gesteuert antreiben lässt. Das Rollo 24 besteht vorzugsweise aus einem blickdichten Material, insbesondere aus einer biegsamen Folie oder einem Textilmaterial oder aus einer Kombination aus genannten Materialien.

Am unteren Ende des Rollos 24 ist eine Führungsstange 28 befestigt, die an ihren freien Enden in zwei senkrechten Führungsnuten ausbildenden Führungen 30a, 30b geführt ist, die beidseitig der Frontscheibe 16 angeordnet sind. Die Führungen 30a, 30b sind vorzugsweise senkrecht zur Dreh- oder Rotationsachse der das Rollo 24 aufnehmenden Welle 22 orientiert.

Die Führungsstange 28 ist darüber hinaus mit zwei im Bereich der Führungen 30a, 30b angeordneten Federelementen, insbesondere Schraubenfedern 32a, 32b mit dem der Welle 22 gegenüberliegenden Randabschnitt des Rahmes 20 verbunden. Vorzugsweise sind die Schraubenfedern 32a, 32b an Halterungen 34a, 34b unterhalb der Führungen 30a, 30b bzw. im Bereich deren freien Enden gehalten. Durch die Schraubenfedern 32a, 32b wird die Führungsstange 28 in die Abdeckstellung des Rollos 24 nach unten vorgespannt. Das Rollo 24 ist damit in jeder Stellung straff aufgespannt. Die Stellung des Rollos ist damit allein über den Schrittmotor 26 steuerbar.

Statt der die Schraubenfedern 32a, 32b umfassenden Federeinrichtung kann die Führungsstange 28 alternativ oder zusätzlich aus einem schweren Material, z.B. aus massivem Metall bestehen, so dass das Rollo 24 durch das Eigengewicht der Führungsstange 28 straff aufgespannt wird. Dies funktioniert allerdings nur, wenn die Abdeckstellung des Rollos 24 mit einer Abwärtsbewegung der Führungsstange 28 erzielt wird.

Der Vorteil der Federeinrichtung mit den Schraubenfedern 32a, 32b besteht darin, dass sie in jeder beliebigen Betätigungsrichtung des Rollos 24 funktioniert.

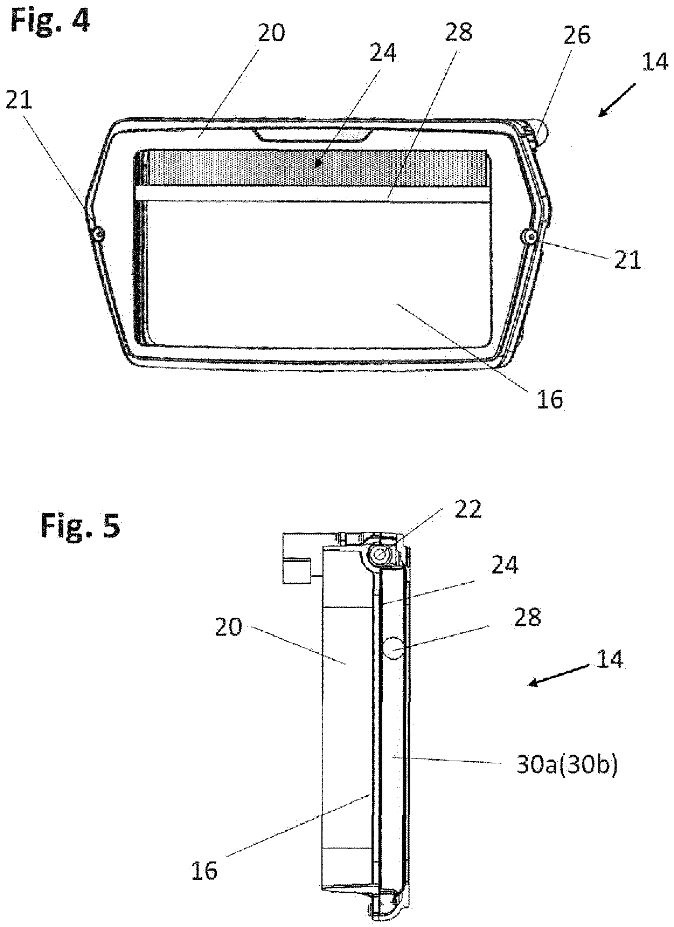

Wie in Fig. 4 zu sehen ist, ist die Abdeckstellung des Rollos 24 nach außen durch die Frontscheibe 16 gut sichtbar. Die durch das Rollo 24 in Abdeckstellung abgeschaltete Funktion der Überwachungskameraeinheit 10 kann somit rein optisch schnell erkannt werden.

Fig. 5 zeigt beispielhaft einen schematischen Längsschnitt durch die Rahmeneinheit 14 gemäß der Figur 4. Daraus ist die sich unmittelbar an die Frontscheibe 16 anschließende und hierzu parallele Führung des Rollos 24 mittels der in den Führungen 30a(30b) geführten Führungsstange 28 ersichtlich.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste:

- 10: Überwachungskameraeinheit
- 12: Kameragehäuse
- 14: Rahmeneinheit
- 16: Frontscheibe
- 18: Anschluss/Datenkabel
- 20: Rahmen
- 21: Schraublöcher zum Verschrauben mit dem Kameragehäuse
- 22: Welle für das Rollo
- 24: Rollo, insbesondere aus biegsamen Material wie Folie oder Textil oder Hybride aus beiden
- 26: Stellmotor zur Betätigung der Welle - Schrittmotor
- 28: Führungsstange
- 30a,b: Führungen mit Führungsnuten für die freien Enden der Führungsstange
- 32a,b: Schraubenfedern zum Vorspannen der Führungsstange in Abdeckstellung des Rollos
- 34a,b: Untere Halterungen für die Schraubenfedern

## Patentansprüche

1. Überwachungskameraeinheit (10) mit einem Kameragehäuse (12), in welchem wenigstens ein bildgebender Sensor als auch eine zugeordnete Optik angeordnet sind, wobei das Kameragehäuse (12) eine Vorderseite aufweist, an der eine Rahmeneinheit (14) mit einer Frontscheibe (16) aus einem transparenten Material angeordnet ist, wobei in der Rahmeneinheit (14) ein Rahmen (20) angeordnet ist und die Rahmeneinheit (14) modulartig als Einheit mit dem Kameragehäuse (12) verbunden ist, wobei die Rahmeneinheit (14) ein Rollo (24) und eine Betätigungsvorrichtung (22, 26, 30, 32, 34) für das Rollo (24) trägt bzw. zumindest teilweise aufnimmt, wobei in der Rahmeneinheit (14) im Bereich der Frontscheibe (16) das Rollo (24) angeordnet ist, welches mittels der Betätigungsvorrichtung (22, 26, 30, 32, 34) zwischen einer die Frontscheibe (16) freigebenden Öffnungsstellung und einer die Frontscheibe (16) zumindest teilweise abdeckenden Abdeckstellung bewegbar ist, und wobei die Frontscheibe (16) in dem Rahmen (20) gehalten ist und die Betätigungsvorrichtung (22, 26, 30, 32, 34) eine Führungsstange (28) umfasst, welche mit ihren freien Enden in am Rahmen (20) ausgebildeten gegenüberliegenden Führungen (30a, 30b) der Betätigungsvorrichtung (22, 26, 30, 32, 34) geführt ist.

2. Überwachungskameraeinheit (10) nach Anspruch 1, **dadurch gekennzeichnet, dass** das Rollo (24) in Öffnungsstellung zusammengerollt ist und/oder hinter dem Rahmen (20) und vor der Optik angeordnet ist.

3. Überwachungskameraeinheit (10) nach den Anspruch 1, **dadurch gekennzeichnet, dass** die Betätigungsvorrichtung (22, 26, 30, 32, 34) eine mit der Führungsstange (28) verbundene Federeinrichtung (32a, 32b) umfasst, welche das an der Führungsstange (28) befestigte Rollo (24) in die Abdeckstellung vorspannt.

4. Überwachungskameraeinheit (10) nach Anspruch 3, **dadurch gekennzeichnet, dass** die Federeinrichtung (32a, 32b) mit zumindest einem der freien Enden der Führungsstange (28) verbunden ist.

5. Überwachungskameraeinheit (10) nach einem der Ansprüche 1 bis 4, **dadurch gekennzeichnet, dass** die Führungsstange (28) aus einem schweren Material, insbesondere massivem Metall, besteht, und konzipiert ist, das Rollo (24) durch das Eigengewicht der Führungsstange (28) in die Abdeckstellung nach unten zumindest teilweise vorzuspannen.

6. Überwachungskameraeinheit (10) nach einem der vorhergehenden Ansprüche, **dadurch gekennzeichnet, dass** die Betätigungsvorrichtung (22, 26, 30, 32, 34) zumindest eine motorisch angetriebene Welle (22) umfasst, auf der das Rollo (24) in Öffnungsstellung aufgerollt ist.

7. Überwachungskameraeinheit (10) nach Anspruch 6, **dadurch gekennzeichnet, dass** die Welle (22) mit einem vorzugsweise durch eine Steuerelektronik ansteuerbaren Stellmotor (26) der Betätigungsvorrichtung (22, 26, 30, 32, 34) verbunden ist.

8. Überwachungskameraeinheit (10) nach Anspruch 7, **dadurch gekennzeichnet, dass** die Frontscheibe (16) rechteckförmig ausgebildet ist, wobei die längeren Seiten des Rechtecks sich horizontal erstrecken.

9. Überwachungskameraeinheit (10) nach Anspruch 7, **dadurch gekennzeichnet, dass** die Welle (22) horizontal angeordnet ist und am oberen Ende der Frontscheibe (16) oder eines/des Rahmens (20) der Frontscheibe (16) angeordnet ist.

10. Überwachungskameraeinheit (10) nach einem der vorhergehenden Ansprüche, **dadurch gekennzeichnet, dass** das Rollo (24) aus einem blickdichten Material, vorzugsweise aus einer gewebeverstärkten Folie besteht.

11. Überwachungskameraeinheit (10) nach einem der vorhergehenden Ansprüche, **dadurch gekennzeichnet, dass** das Rollo (24) an seiner der Frontscheibe (16) zugewandten Seite eine Markierung aufweist, die die Abdeckstellung des Rollos (24) nach außen kenntlich macht.

## Claims

1. Surveillance camera unit (10) comprising a camera housing (12) in which at least one imaging sensor and an associated optical system are arranged, wherein the camera housing (12) comprises a front face on which a frame unit (14) with a front pane (16) made of a transparent material is arranged, wherein a frame (20) is arranged within the frame unit (14) and the frame unit (14) is connected to the camera housing (12) as a modular unit, wherein the frame unit (14) supports or at least partially accommodates a roller blind (24) and an actuating device (22, 26, 30, 32, 34) for the roller blind (24), wherein the roller blind (24) is arranged within the frame unit (14) in the region of the front pane (16), which roller blind (24) is movable by means of the actuating device (22, 26, 30, 32, 34) between an open position in which the front pane (16) is exposed and a covering position in which the front pane (16) is at least partially covered, and wherein the front pane (16) is held in the frame (20) and the actuating mechanism (22, 26, 30, 32, 34) comprises a guide rod (28) which is guided at its free ends in opposing guides (30a, 30b) for the actuating device (22, 26, 30, 32, 34) formed on the frame (20).

2. Surveillance camera unit (10) according to claim 1, **characterised in that** the roller blind (24) is rolled up in the open position and/or is arranged behind the frame (20) and in front of the optical system.

3. Surveillance camera unit (10) according to claim 1, **characterised in that** the actuating device (22, 26, 30, 32, 34) comprises a spring mechanism (32a, 32b) connected to the guide rod (28), which biases the roller blind (24) secured to the guide rod (28) into the covering position.

4. Surveillance camera unit (10) according to claim 3, **characterised in that** the spring mechanism (32a, 32b) is connected to at least one of the free ends of the guide rod (28).

5. Surveillance camera unit (10) according to any one of claims 1 to 4, **characterised in that** the guide rod (28) is made of a heavy material, in particular solid metal, and is designed to pre-tension the roller blind (24) at least partially downwards into the covering position by means of the own weight of the guide rod (28).

6. Surveillance camera unit (10) according to any one of the preceding claims, **characterised in that** the actuating device (22, 26, 30, 32, 34) comprises at least one motor-driven shaft (22) onto which the roller blind (24) is wound in the open position.

7. Surveillance camera unit (10) according to claim 6, **characterised in that** the shaft (22) is connected to an actuator motor (26) of the actuating device (22, 26, 30, 32, 34), which is preferably controllable by control electronics.

8. Surveillance camera unit (10) according to claim 7, **characterised in that** the front pane (16) is rectangular in shape, wherein the longer sides of the rectangle extend horizontally.

9. Surveillance camera unit (10) according to claim 7, **characterised in that** the shaft (22) is arranged horizontally and is located at the upper end of the front pane (16) or of a/the frame (20) of the front pane (16).

10. Surveillance camera unit (10) according to one of the preceding claims, **characterised in that** the roller blind (24) consists of an opaque material, preferably a fabric-reinforced film.

11. Surveillance camera unit (10) according to one of the preceding claims, **characterised in that** the roller blind (24) comprises a mark on its side facing the front pane (16) which indicates the covering position iof the roller blind (24)to the outside.

## Revendications

1. Unité de caméra de surveillance (10) comprenant un boîtier de caméra (12) dans lequel sont disposés au moins un capteur d'imagerie ainsi qu'un système optique associé, le boîtier de caméra (12) présentant une face avant sur laquelle est disposée une unité de cadre (14) comportant une vitre frontale (16) en matériau transparent, dans lequel un cadre (20) est disposé dans l'unité de cadre (14) et l'unité de cadre (14) est reliée de manière modulaire au boîtier de caméra (12) en tant qu'ensemble, dans lequel l'unité de cadre (14) supporte ou loge au moins partiellement un store (24) et un dispositif d'actionnement (22, 26, 30, 32, 34) pour le store (24), dans lequel le store (24) est disposé dans l'unité de cadre (14) au niveau de la vitre avant (16) et peut être déplacé au moyen du dispositif d'actionnement (22, 26, 30, 32, 34) entre une position d'ouverture libérant la vitre avant (16) et une position de recouvrement recouvrant au moins partiellement la vitre avant (16), et dans lequel la vitre avant (16) est maintenu dans le cadre (20) et le dispositif d'actionnement (22, 26, 30, 32, 34) comprend une tige de guidage (28) qui est guidée par ses extrémités libres dans des glissières opposées (30a, 30b) du dispositif d'actionnement (22, 26, 30, 32, 34) formées sur le cadre (20).

2. Unité de caméra de surveillance (10) selon la revendication 1, **caractérisée en ce que** le store (24) est enroulé en position d'ouverture et/ou est disposé derrière le cadre (20) et devant l'optique.

3. Unité de caméra de surveillance (10) selon la revendication 1, **caractérisée en ce que** le dispositif d'actionnement (22, 26, 30, 32, 34) comprend un dispositif à ressort (32a, 32b) relié à la tige de guidage (28), qui précontraint le store (24) fixé à la tige de guidage (28) en position de recouvrement.

4. Unité de caméra de surveillance (10) selon la revendication 3, **caractérisée en ce que** le dispositif à ressort (32a, 32b) est relié à au moins l'une des extrémités libres de la tige de guidage (28).

5. Unité de caméra de surveillance (10) selon l'une des revendications 1 à 4, **caractérisée en ce que** la tige de guidage (28) est constituée d'un matériau lourd, en particulier de métal massif, et est conçue pour précontraindre au moins partiellement le store (24) vers le bas, en position de recouvrement, grâce au poids propre de la tige de guidage (28).

6. Unité de caméra de surveillance (10) selon l'une des revendications précédentes, **caractérisée en ce que** le dispositif d'actionnement (22, 26, 30, 32, 34) comprend au moins un arbre (22) entraîné par un moteur, sur lequel le store (24) est enroulé en position d'ouverture.

7. Unité de caméra de surveillance (10) selon la revendication 6, **caractérisée en ce que** l'arbre (22) est relié à un moteur d'actionnement (26) du dispositif d'actionnement (22, 26, 30, 32, 34), commandé de préférence par un système électronique de commande.

8. Unité de caméra de surveillance (10) selon la revendication 7, **caractérisée en ce que** la vitre avant (16) est de forme rectangulaire, les côtés les plus longs du rectangle s'étendant horizontalement.

9. Unité de caméra de surveillance (10) selon la revendication 7, **caractérisée en ce que** l'arbre (22) est disposé horizontalement et est situé à l'extrémité supérieure de la vitre avant (16) ou d'un/du cadre (20) de la vitre avant (16).

10. Unité de caméra de surveillance (10) selon l'une des revendications précédentes, **caractérisée en ce que** le store (24) est constitué d'un matériau opaque, de préférence d'un film renforcé de tissu.

11. Unité de caméra de surveillance (10) selon l'une des revendications précédentes, **caractérisée en ce que** le store (24) présente, sur sa face tournée vers la vitre avant (16), un repère indiquant la position de recouvrement du store (24) vers l'extérieur.
